# EUROPÄISCHE PATENTSCHRIFT

(11) **EP 1 379 109 B1**
(45) Veröffentlichungstag und Bekanntmachung des Hinweises auf die Patenterteilung: **21.02.2007**
(21) Anmeldenummer: 03014609.6
(22) Anmeldetag: 26.06.2003
(51) Int. Cl.: H05B 41/282, H05B 41/285, H05B 41/298, H02M 1/00

(54) **Ansteuerung für einen Halbbrücken-Wechselrichter**
Controller circuit for a half-bridge converter
Dispositif de commande d'onduleur demi-pont

(30) Priorität: 02.07.2002 DE 10229633
(43) Veröffentlichungstag der Anmeldung: 07.01.2004
(73) Patentinhaber: Patent-Treuhand-Gesellschaft für elektrische Glühlampen mbH, 81543 München (DE)
(72) Erfinder: Franck, Felix, Dr., 80333 München (DE)

(56) Entgegenhaltungen:
- EP-A- 0 409 328
- DE-A- 19 639 873

## Beschreibung

### Technisches Gebiet

Die Erfindung geht aus von einem Halbbrücken-Wechselrichter gemäß dem Oberbegriff des Anspruchs 1. Die Erfindung betrifft die Erzeugung einer optimalen Totzeit, in der keiner von zwei Halbbrückenschaltern eingeschaltet sein darf.

### Stand der Technik

Halbbrücken-Wechselrichter sind zur Erzeugung einer Wechselspannung aus einer Gleichspannung hinlänglich bekannt. Breite Anwendung finden sie in Schaltnetzteilen (SMPS). Da der Halbbrücken-Wechselrichter kostengünstig bezüglich anderer Schaltnetzteil-Topologien (z. B. Vollbrücken-Wechselrichter) ist, dominiert er insbesondere kostensensitive Bereiche wie die Lichttechnik. Elektronische Betriebsgeräte für Leuchtstofflampen oder Halogenglühlampen sind nahezu ausschließlich mit Halbbrücken-Wechselrichtern ausgestattet.

Im wesentlichen besteht ein Halbbrücken-Wechselrichter aus der Serienschaltung eines oberen und eines unteren Halbbrückenschalters, die an eine Energieversorgung angeschlossen ist, die im wesentlichen eine Gleichspannung mit einem Plus- und einem Minuspol darstellt. Im einfachsten Fall handelt es sich um eine gleichgerichtete Netzspannung. Am Verbindungspunkt der Halbbrückenschalter wird eine Halbbrückenausgangsspannung UHB mit einem wesentlichen Wechselspannungsanteil bereitgestellt, die einen Lastkreis speist, der einen Laststrom IL aufnimmt. Im Falle der Lichttechnik besteht der Lastkreis im wesentlichen aus einem Reaktanznetzwerk mit einer oder mehreren Lampen als Energieverbraucher.

Im allgemeinen sind die beiden Halbbrückenschalter als elektronische Schalter wie z.B. MOSFET, Bipolartransistor oder IGBT ausgeführt. Aus halbleitertechnologischen Gründen werden in der Leistungselektronik meist N-Kanal bzw. NPN-Transistoren verwendet, weshalb sich die folgenden Ausführungen auf diese Art der Transistoren beziehen. Durchwegs ist jedoch auch der Einsatz von dazu komplementären Transistoren möglich. Es ist lediglich die Polung der Energieversorgung und ggf. der Ansteuerung der Transistoren zu invertieren. Bei N-Kanal- bzw. NPN-Transistoren ist der obere Halbbrückenschalter mit dem Pluspol und der untere Transistor mit dem Minuspol gekoppelt, wobei der Minuspol ein Bezugspotenzial für die gesamte, den Halbbrücken-Wechselrichter enthaltende Schaltungsanordnung darstellt. Daraus erklären sich auch die Bezeichnungen oberer und unterer Halbbrückenschalter: Der obere Halbbrückenschalter liegt bezüglich des Bezugspotenzials zumindest in der Zeit, in der er eingeschaltet ist, auf höherem Potenzial als der untere Halbbrückenschalter.

Es muss in jedem Fall vermieden werden, dass beide Halbbrückenschalter gleichzeitig eingeschaltet sind, da sonst die Energieversorgung kurzgeschlossen wird. Vielmehr wird zwischen die Phasen, in denen einer der beiden Halbbrückenschalter eingeschaltet ist, eine Phase eingefügt, in denen keiner der beiden Halbbrückenschalter eingeschaltet ist. Diese Phase wird in der Literatur Totzeit genannt. Die Totzeit hat nicht nur die Funktion, zwischen den eingeschalteten Phasen der Halbbrückenschalter eine Sicherheitslücke zu schaffen, vielmehr soll während der Totzeit dem Verbindungspunkt der Halbbrückenschalter die Gelegenheit gegeben werden, sein Potenzial zu wechseln. Die Energie, die im Lastkreis, und dort vorwiegend in induktiven Bauelementen, gespeichert ist, ist in der Lage, die Spannung an dem Halbbrückenschalter, der nach der Totzeit eingeschaltet wird, zu eliminieren oder zumindest auf ein Minimum zu reduzieren. Damit kann der betreffende Halbbrückenschalter verlustlos oder zumindest mit minimal möglicher Verlustleistung eingeschaltet werden. In der Literatur wird dieser Sachverhalt auch mit Zero-Voltage-Switching (ZVS) bezeichnet. Die Zeit, die verstreicht, bis der Verbindungspunkt der Halbbrückenschalter ein Potenzial angenommen hat, das minimale Einschaltverluste gewährleistet, wird im folgenden Umschwingzeit genannt.

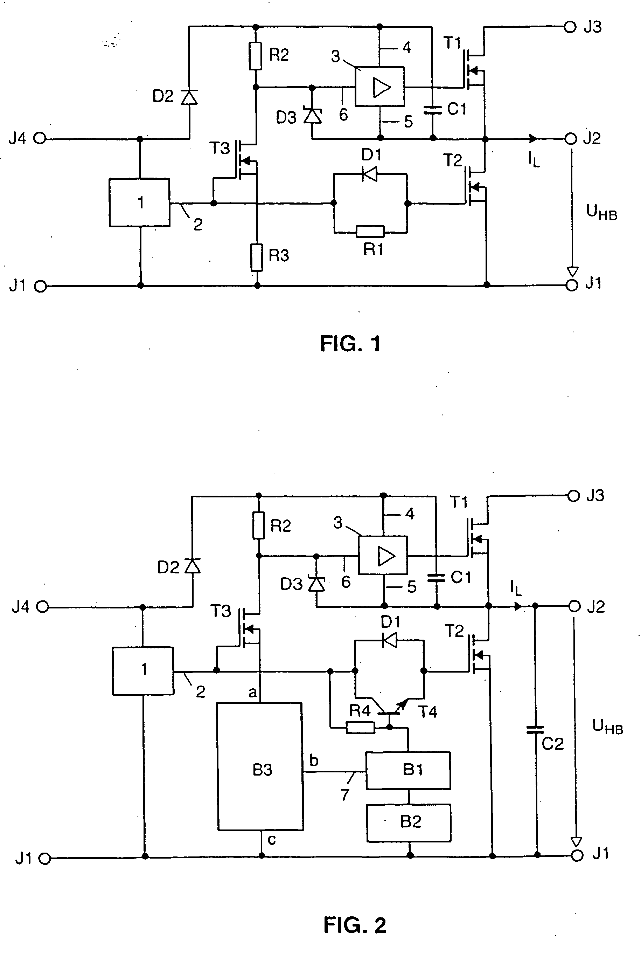

Die als Halbbrückenschalter verwendeten elektronischen Schalter besitzen in der Regel eine Arbeitselektrode (z.B. Drain, Kollektor), eine Bezugselektrode (z.B. Source, Emitter) und eine Steuerelektrode (z.B. Gate, Basis). Die Steuerelektrode bildet einen Steuereingang des Halbbrückenschalters. Der Schalter wird im allgemeinen durch ein Ansteuersignal eingeschaltet, das zwischen der Steuerelektrode und Bezugselektrode anliegt. In Figur 1 ist ein Stand der Technik dafür dargestellt, wie die Ansteuersignale für die Halbbrückenschalter bereitgestellt werden.

Die Halbbrückenschalter T1 und T2 sind in Figur 1 als MOSFET ausgeführt. Der obere Halbbrückenschalter T1 ist in Serie zum unteren Halbbrückenschalter T2 geschaltet. Der Drainanschluss des oberen Halbbrückenschalters T1 ist mit der Verbindungsstelle J3 verbunden, an der der Pluspol der Energieversorgung angeschlossen wird. Der Sourceanschluss des unteren Halbbrückenschalters T2 ist mit der Verbindungsstelle J 1 verbunden, an der der Minuspol der Energieversorgung angeschlossen wird. Wie aus Figur 1 ersichtlich wird, bildet das Potenzial von J1 ein Bezugspotenzial für den gezeigten Halbbrücken-Wechselrichter. Der Sourceanschluss von T1 und der Drainanschluss von T2 sind verbunden und werden der Verbindungsstelle J2 zugeführt, die den Halbbrücken-Ausgang bildet. An J2 liefert der Halbbrücken-Wechselrichter eine Halbbrückenausgangsspannung UHB an einen Lastkreis. Im folgenden wird die Ansteuerung der Gateanschlüsse von T1 und T2 beschrieben, wie sie dem Stand der Technik entspricht und in Figur 1 dargestellt ist.

Ein Steuerbaustein 1, der über die Verbindungsstelle J4 von einer Hilfsspannungsversorgung mit Energie versorgt wird, stellt an seinem Steuerausgang 2 ein rechteckförmiges Steuersignal zur Verfügung. Die Form des Steuersignals entspricht dem Inversen der gewünschten Form der Halbbrückenausgangsspannung UHB. Das Steuersignal kann einen Low- und einen High-Zustand annehmen. Intention ist, dass im Low-Zustand des Steuersignals der obere Halbbrückenschalter T1 und im High-Zustand der untere Halbbrückenschalter T2 eingeschaltet wird. Das Steuersignal wird über die Parallelschaltung eines Widerstands R1 und einer Diode D1 mit dem Gate des unteren Halbbrückenschalters T2 verbunden. Dem entsprechend muss der Spannungswert des Steuersignals im High-Zustand mindestens so groß sein wie die Gate-Source-Spannung, die zum Einschalten des unteren Halbbrückenschalters T2 nötig ist. Der Spannungswert des Steuersignals im Low-Zustand muss kleiner sein als der Minimalwert, der für die betreffende Gate-Source-Spannung zum Einschalten nötig ist. Der Widerstand R1 bewirkt eine Einschaltverzögerung für T2, die zum Ausschalten von T2 durch die Diode D1 überbrückt wird.

Aufwändiger ist die Bereitstellung des Ansteuersignals für den oberen Halbbrückentransistor T1, da die Bezugselektrode von T1 nicht auf dem gleichen Potenzial liegt wie das Bezugspotenzial des Steuerbausteins. Entsprechend Figur 1 ist für den oberen Halbbrückentransistor T1 eine obere Ansteuerschaltung 3 vorgesehen. Diese besteht im einfachsten Fall aus einer aus der Literatur bekannten Totempole-Schaltung. Der Ausgang der oberen Ansteuerschaltung ist mit dem Gate des oberen Halbbrückentransistors T1 verbunden. Die Energie für die obere Ansteuerschaltung wird über die Anschlüsse 4 und 5 zugeführt, wobei der Anschluss 5 auch das Bezugspotenzial für den Ausgang der oberen Ansteuerschaltung darstellt und am Anschluss 4 eine Betriebsspannung der oberen Ansteuerschaltung benötigt wird. Die Energieversorgung für die obere Ansteuerschaltung ist durch eine bekannte Pumpschaltung bestehend aus dem Kondensator C1 und der Diode D2 realisiert. C1 und D2 sind in Serie zwischen die Hilfsspannungsversorgung am Verbindungspunkt J4 und dem Halbbrücken-Ausgang am Verbindungspunkt J2 geschaltet. Vom Kondensator C1 wird die Energie für die obere Ansteuerschaltung bezogen.

Der Eingang der oberen Ansteuerschaltung 6 ist über einen Pull-Up Widerstand R2 mit dem Anschluss 4 der oberen Ansteuerschaltung, an dem deren Betriebsspannung anliegt, verbunden. Ohne weitere Maßnahmen führt der Pull-Up-Widerstand R2 zu einem Ansteuersignal für den oberen Halbbrückentransistor, das diesen einschaltet. Es muss also dafür gesorgt werden, dass im High-Zustand des Steuersignals aus dem Steuerbaustein der obere Halbbrückentransistor T1 abgeschaltet wird. Diesen Zweck erfüllt ein Level-Shift-Schalter T3. Er ist in Figur 1 als MOSFET ausgeführt, dessen Drainanschluss mit dem Eingang der oberen Ansteuerschaltung 6, dessen Gateanschluss mit dem Steuerausgang des Steuerbausteins 2 und dessen Sourceanschluss über einen Stromgegenkopplungswiderstand R3 mit dem Bezugspotenzial des Halbbrückewechselrichters verbunden ist. Im High-Zustand des Steuersignals wird der Level-Shift-Schalter T3 eingeschaltet, wodurch die Spannung am Eingang der oberen Ansteuerschaltung 6 auf einen Wert reduziert wird, der zum Ausschalten des oberen Halbbrückentransistors T1 führt. Der Drainanschluss des Level-Shift-Schalters T3 ist zusätzlich über eine Diode D3 mit dem Halbbrücken-Ausgang (J2) verbunden. Dadurch wird vermieden, dass beim Einschalten des Level-Shift-Schalters T3 ein Strom durch die obere Ansteuerschaltung fließt. D3 wird bevorzugt als Schottky-Diode ausgeführt, um eine auftretende Flussspannung gering zu halten. Der Stromgegenkopplungswiderstand R3 soll den Strom durch den Level-Shift-Schalter T3 begrenzen.

Eine Einschaltverzögerung des oberen Halbbrückentransistors T1 ist bei der beschriebenen Schaltung dadurch gegeben, dass nach dem Ausschalten von T3 die Millerkapazität von T3 über R2 geladen werden muss. Erst wenn die Spannung an dieser Millerkapazität einen gegebenen Schwellwert am Eingang 6 der oberen Ansteuerschaltung überschreitet, wird der obere Halbbrückentransistors T1 eingeschaltet. Durch den Wert des Pull-Up-Widerstands R2 kann also die gewünschte Totzeit, die zwischen Ausschalten des unteren Halbbrückentransistors T2 und dem Einschalten des oberen Halbbrückentransistors T1 verstreicht, eingestellt werden.

Eine Einschaltverzögerung für den unteren Halbbrückentransistor T2 ist nicht auf diese Weise zu realisieren. Lediglich der Widerstand R1 bietet die Möglichkeit, die Ladezeit der Gate-Source-Kapazität des unteren Halbbrückentransistors T2 zu modifizieren. Damit sind aber nur Totzeiten zu realisieren, die kürzer sind als die o.g. Umschwingzeit. Längere Totzeiten würden dazu führen, dass der untere Halbbrückentransistor T2 zu lange im sog. linearen Arbeitsbereich betrieben wird, in dem sehr starke Verluste auftreten.

In der Schrift US 5,550,436 (Houk) wird eine Totzeitgenerierung für den Übergang vom oberen zum unteren Halbbrückentransistor durch eine Einschaltverzögerung (LSDELAY) für den unteren Halbbrückentransistor beschrieben. Diese Lösung hat jedoch zwei Nachteile: Zum einen bildet die genannte Einschaltverzögerung einen Teil einer integrierten Schaltung, was einen erheblichen Kostenaufwand bedeutet; zum Anderen ist die Totzeit für eine gegebene Dimensionierung fix und passt sich nicht der o. g. Umschwingzeit an. Damit muss die Totzeit immer länger sein als die optimale Totzeit, was zu Wirkungsgradeinbußen des Halbbrückenwandlers führt.

In DE 196 39 873 ist eine MOS-Gate-Treiberschaltung beschrieben, die Querleitungsströme in Halbbrückenschaltungen verhindert. Für jeden Halbbrückentransistor wird in einer integrierten Schaltung eine Totzeit-Schaltung mit einstellbarer Totzeit-Verzögerungsschaltung bereitgestellt. Die Totzeit-Verzögerungsschaltung wird von einer Spannung im Lastkreis gesteuert, der an die Halbbrückenschaltungen angeschlossen ist.

In EP 0 409 328 ist eine Halbbrückenschaltung beschrieben, die von einem Schaltsignal umgeschaltet wird. Eine Steuerschaltung, die die Halbbrückenschalter steuert, ist über einen Kondensator mit dem Ausgang der Halbbrückenschaltung gekoppelt. Die Kopplung ist so ausgelegt, dass ein Umschalten der Halbbrückenschaltung dann unterbunden wird, wenn Strom durch den Kondensator fließt. Ein Strom durch den Kondensator wird als ein Indiz dafür benutzt, dass die Spannung am Ausgang der Halbbrückenschaltung am Wechseln ist.

### Darstellung der Erfindung

Es ist Aufgabe der vorliegenden Erfindung, einen Halbbrücken-Wechselrichter gemäß dem Oberbegriff des Anspruchs 1 bereitzustellen, der kostengünstig eine optimale Totzeit bewerkstelligt.

Diese Aufgabe wird durch einen Halbbrücken-Wechselrichter mit den Merkmalen des Oberbegriffs des Anspruchs 1 durch die Merkmale des kennzeichnenden Teils des Anspruchs 1 gelöst. Besonders vorteilhafte Ausgestaltungen finden sich in den abhängigen Ansprüchen.

Erfindungsgemäß ist der Steuereingang des unteren Halbbrückenschalters über einen Unterbrechungsschalter mit dem Steuerausgang eines Steuerbausteins gekoppelt. Der High-Zustand dessen Steuersignals kann damit nicht direkt zum Einschalten des unteren Halbbrückentransistors führen. Vielmehr muss dafür erst der Unterbrechungsschalter eingeschaltet werden. Mit Hilfe des Unterbrechungsschalters kann somit das Einschalten des unteren Halbbrückentransistors so lange verzögert werden, bis die Umschwingzeit verstrichen ist.

Ein Indikator dafür, dass die Umschwingzeit verstrichen ist, bildet erfindungsgemäß der Strom durch einen Level-Shift-Schalter. Geht das Steuersignal am Steuerausgang des Steuerbausteins in den High-Zustand über, so wird zunächst der Level-Shift-Schalter eingeschaltet. Da sich zu diesem Zeitpunkt der Halbbrücken-Ausgang auf dem Plus-Potenzial der Energieversorgung befindet, fließt zunächst ein hoher Strom durch den Level-Shift-Schalter, der im wesentlichen durch einen Stromgegenkopplungswiderstand begrenzt wird. Solange dieser Strom über einer vorgegebenen Schwelle liegt, ist der Unterbrechungsschalter erfindungsgemäß ausgeschaltet und der untere Halbrückenschalter wird nicht angesteuert. Nachdem oben beschriebenen Umschwingvorgang der Halbbrücke befindet sich das Potenzial des Halbbrücken-Ausgangs auf dem Potenzial des Bezugspotenzials, bzw. des Minuspols. Zu diesem Zeitpunkt wird der Strom durch den Level-Shift-Schalter im wesentlichen durch den Pull-Up-Widerstand bestimmt. Dieser ist verglichen mit dem Strom beim Einschalten des Level-Shift-Schalters gering und liegt unter der o.g. vorgegebenen Schwelle. Beim Unterschreiten der Schwelle wird erfindungsgemäß der Unterbrechungsschalter eingeschaltet, und der Steuerbaustein kann den unteren Halbbrückenschalter einschalten. Die Erfindung stellt somit mit geringem Aufwand sicher, dass die Totzeit beim Übergang der Leitfähigkeit vom oberen zum unteren Transistor immer der Umschwingzeit entspricht.

Die Steuerung des Unterbrechungsschalters durch den Strom, der im Level-Shift-Schalter fließt, kann erfindungsgemäß mittels eines Verzögerungsschalters erfolgen. Dabei wird der Unterbrechungsschalter vom Steuerbaustein angesteuert. D.h. der Steuerbaustein gibt ein Steuersignal ab, das grundsätzlich in der Lage ist, den Unterbrechungsschalter gleichzeitig mit dem Level-Shift-Schalter einzuschalten. Dies wird durch den Verzögerungsschalter verhindert, indem dieser den Steuereingang des Unterbrechungsschalters so lange blockiert, bis der Strom durch den Level-Shift-Schalter unter die gegebene Schwelle abgesunken ist.

Ein weiterer Aspekt der Erfindung liegt im Umschwingvorgang der Halbbrücke begründet. Um beim Ausschalten eines Halbbrückenschalters den Spannungsanstieg am betreffenden Halbbrückenschalter zu verzögern und damit die Ausschaltverluste zu reduzieren, wird bekanntermaßen ein sog. Trapezkondensator parallel zu einem Halbbrückenschalter geschaltet. Wirkungsgleich kann der Trapezkondensator zum oberen oder zum unteren Halbrückenschalter parallel geschaltet werden.

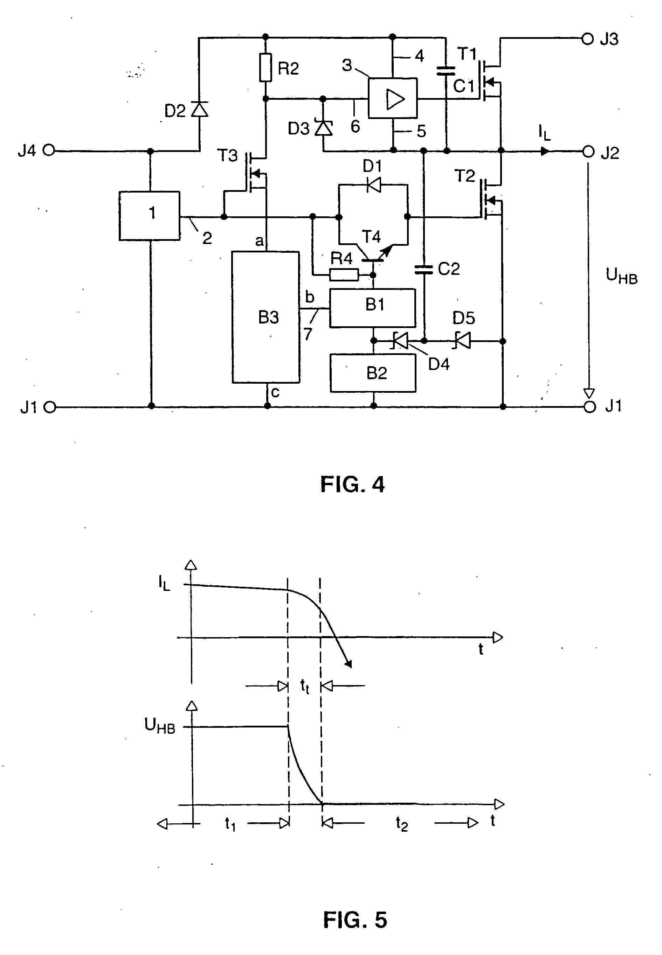

Zur Verdeutlichung eines Umschwingvorgangs dient Figur 5. Im unteren Teil der Figur 5 ist der zeitliche Verlauf der Halbbrückenausgangsspannung UHB bezogen auf den Minuspol der Energieversorgung (Bezugspotenzial) dargestellt. Diese Spannung entspricht der Spannung am unteren Halbbrückentransistor zwischen seiner Arbeits- (Drain) und seiner Bezugselektrode (Source). Der obere Teil zeigt einen korrespondieren Laststrom IL. Während der Zeit t1 ist der obere Halbbrückentransistor T1 eingeschaltet. In dieser Zeit weist UHB einen hohen Wert auf, der der Spannung entspricht, die die Energieversorgung liefert. Während der Zeit t2 ist der untere Halbbrückentransistor T2 eingeschaltet. In dieser Zeit weist UHB einen Wert auf, der nahe Null ist. Zwischen den Zeitabschnitten t1 und t2 liegt die Totzeit tt, in der keiner der beiden Halbbrückentransistoren eingeschaltet ist. In Figur 5 erkennt man, dass während der Totzeit tt der Wert der Spannung UHB auf Null absinkt und der untere Halbbrückentransistor T2 verlustfrei eingeschaltet werden kann. Der Verlauf der Spannung UHB während der Totzeit tt ist abhängig vom Wert des Trapezkondensators und vom Laststrom IL. Der Laststrom IL muss in der Lage sein, den Trapezkondensator zu entladen bzw. auf den Wert der Spannung der Energieversorgung aufzuladen.

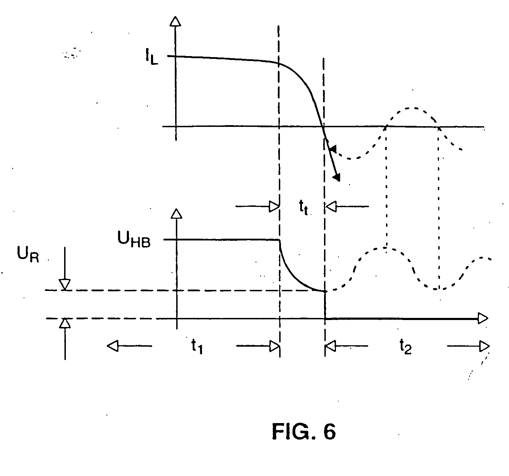

Dies gelingt bei ungünstigen Konstellationen nicht immer. Ein solcher Fall ist in Figur 6 dargestellt. Wie in Figur 5 ist der zeitliche Verlauf der Spannung am Halbbrückenausgang UHB und des Laststroms IL dargestellt. Nach dem Abschalten des oberen Halbbrückentransistors T1 nimmt der Wert von UHB zwar zunächst ab, geht aber nicht auf den Wert Null, sondern steigt nach durchlaufen eines Minimums wieder an und geht in eine periodische Schwingung über. Der Laststrom IL ist in diesem Fall zu klein, als dass er in der Lage wäre, den Trapezkondensator vollständig zu entladen. Erfindungsgemäß wird die Totzeit tt so gewählt, dass der untere Halbrückentransistor T2 dann eingeschaltet wird, wenn die Spannung UHB minimal ist. In diesem Fall sind die Einschaltverluste von T2 nicht Null, weil er auf eine Restspannung UR einschalten muss. Jedoch werden die Einschaltverluste durch die erfindungsgemäße Wahl der Totzeit tt minimiert. Beim Einschalten von T2 sinkt der Wert von UHB natürlich auf Null ab. Gestrichelt sind in Figur 6 der Verlauf von UHB und IL eingezeichnet, falls T2 nicht einschalten würde.

Ein Problem stellt die Detektion des Minimums des Werts von UHB dar. Erfindungsgemäß wird dafür der Strom durch den Trapezkondensator herangezogen. Eine Vorrichtung zur Erfassung des Stroms durch den Trapezkondensator stellt fest, ab welchem Zeitpunkt der Trapezkondensator nicht weiter entladen wird, sondern wieder aufgeladen wird. Ab diesem Zeitpunkt fließt Strom vom Halbbrückenausgang, also vom Verbindungspunkt der Halbbrückentransistoren, zum Trapezkondensator. Die Vorrichtung zur Stromerfassung durch den Trapezkondensator hebt erfindungsgemäß zu diesem Zeitpunkt die Blockierung des Steuereingangs des Unterbrechungsschalters auf und gibt somit die Ansteuerung des unteren Halbbrückentransistors T2 frei.

Im Fall wie er in Figur 5 beschrieben wird bleibt die Stromerfassung durch den Trapezkondensator wirkungslos. Vielmehr wird, wie oben beschrieben, der untere Halbbrückentransistor T2 dann eingeschaltet, wenn aufgrund der auf Null abgesunkenen Halbbrückenausgangsspannung UHB der Strom durch den Level-Shift-Transistor unter eine gegebene Schwelle absinkt.

### Kurze Beschreibung der Zeichnungen

Im folgenden soll die Erfindung anhand von Ausführungsbeispielen unter Bezugnahme auf Zeichnungen näher erläutert werden. Es zeigen:
- Figur 1: einen Halbbrücken-Wechselrichter, gemäß dem Stand der Technik
- Figur 2: ein Ausführungsbeispiel für einen erfindungsgemäßen Halbbrücken-Wechselrichter,
- Figur 3: a) ein Ausführungsbeispiel für einen Verzögerungsschalter,
b) ein weiteres Ausführungsbeispiel für einen Verzögerungsschalter,
c) ein Ausführungsbeispiel für ein Stromgegenkopplungsnetzwerk,
d) ein Ausführungsbeispiel für einen Block, der die Stromgegenkopplung des Level-Shift-Schalters und die Steuerung des Verzögerungsschalters bewerkstelligt,
e) ein weiteres Ausführungsbeispiel für einen Block, der die Stromgegenkopplung des Level-Shift-Schalters und die Steuerung des Verzögerungsschalters bewerkstelligt,
- Figur 4: ein Ausführungsbeispiel für einen erfindungsgemäßen Halbbrückenwechselrichter mit Detektion des Minimums der Halbbrückenausgangsspannung,
- Figur 5: Beispiel für den zeitlichen Verlauf einer Halbbrückenausgangsspannung und eines Laststroms ohne Einschaltverluste,
- Figur 6: Beispiel für den zeitlichen Verlauf einer Halbbrückenausgangsspannung und eines Laststroms mit minimierten Einschaltverlusten.

Im folgenden werden Widerstände durch den Buchstaben R, Transistoren durch den Buchstaben T, Dioden durch den Buchstaben D, Verbindungsstellen durch den Buchstaben J jeweils gefolgt von einer Zahl bezeichnet. Auch werden im folgenden für gleiche und gleichwirkende Elemente der verschiedenen Ausführungsbeispiele durchweg gleiche Bezugszeichen verwendet.

### Bevorzugte Ausführung der Erfindung

In Figur 2 ist ein Ausführungsbeispiel für einen erfindungsgemäßen Halbbrücken-wechselrichter dargestellt. Die in Figur 1 beschriebenen Bauteile eines Halbbrückenwechselrichters und deren Wirkungsweise, wie sie aus dem Stand der Technik bekannt sind, werden im folgenden nicht nochmals angeführt. Im Gegensatz zu einem Halbbrücken-Wechselrichter gemäß dem Stand der Technik, ist der Steuerausgang 2 des Steuerbausteins 1 nicht über den Widerstand R1, sondern erfindungsgemäß über einen Unterbrechungsschalter T4 mit der Steuerelektrode des unteren Halbbrückenschalters T2 verbunden. T4 ist als NPN-Bipolartransistor ausgeführt, könnte prinzipiell aber durch einen beliebigen elektronischen Schalter ersetzt werden. Die Arbeitselektrode des Unterbrechungsschalters T4, im Beispiel der Kollektor von T4, ist mit dem Steuerausgang 2 des Steuerbausteins 1 verbunden. Die Bezugselektrode des Unterbrechungsschalters T4, im Beispiel der Emitter von T4, ist mit der Steuerelektrode des unteren Halbbrückenschalters T2 verbunden. Zwischen der Steuerelektrode des Unterbrechungsschalters T4, im Beispiel der Basis von T4, und dem Kollektor von T4 ist ein Ansteuerwiderstand R4 geschaltet. Die Basis von T4 ist über die Blöcke B 1 und B2 mit dem Minuspol der Energieversorgung (J1) verbunden. Der Block B 1 enthält den oben beschriebenen Verzögerungsschalter und der Block B2 ein Stromgegenkopplungsnetzwerk für den Verzögerungsschalter. Der Block B 1 besitzt einen Steuereingang 7, in den erfindungsgemäß ein dem Strom durch den Level-Shift-Schalter T3 proportionales Signal eingespeist wird. Dieses Signal wird im Ausführungsbeispiel in Figur 2 durch eine Strommessvorrichtung bereitgestellt, die durch einen Block B3 mit einem Messausgang b realisiert ist. Der Block B3 besitzt zusätzlich die Anschlüsse a und c. Gegenüber der Figur 1 ist der Stromgegenkopplungswiderstand R3 durch den Block 3 mit den Anschlüssen a und c ersetzt. Zwischen den Anschlüssen a und c erfüllt der Block 3 demgemäß eine Stromgegenkopplungseigenschaft für den Level-Shift-Schalter T3. Am Messausgang b des Blocks 3 wird ein Signal bereit gestellt, das dem Strom vom Anschluss a nach c und damit dem Strom durch den Level-Shift-Schalter T3 proportional ist. Der Messausgang b des Blocks 3 ist mit dem Steuereingang 7 des Blocks 1 verbunden.

Über den Ansteuerwiderstand R4 wird der Unterbrechungsschalter T4 durch das Steuersignal des Steuerbausteins 1 angesteuert. Wechselt das Steuersignal auf High-Zustand, ist jedoch der Verzögerungsschalter im Block B1 aufgrund des hohen Stroms im Level-Shift-Schalter eingeschaltet und blockiert somit den Steuereingang des Unterbrechungsschalters T4. Im Ausführungsbeispiel gemäß Figur 2 bedeutet dies, dass die Basis von T4 durch den Verzögerungsschalter auf das Bezugspotenzial, nämlich den Minuspol der Energieversorgung (J1), gezogen wird. Sobald der Verzögerungsschalter (B1) aufgrund des abgefallenen Stromes durch den Level-Shift-Schalter T3 abschaltet, wird der Unterbrechungsschalter T4 über den Ansteuerwiderstand R4 eingeschaltet.

Im Vergleich zu Figur 1 ist in Figur 2 auch ein Trapezkondensator C2 parallel zur Ausgangsspannung der Halbbrücke UHB geschaltet.

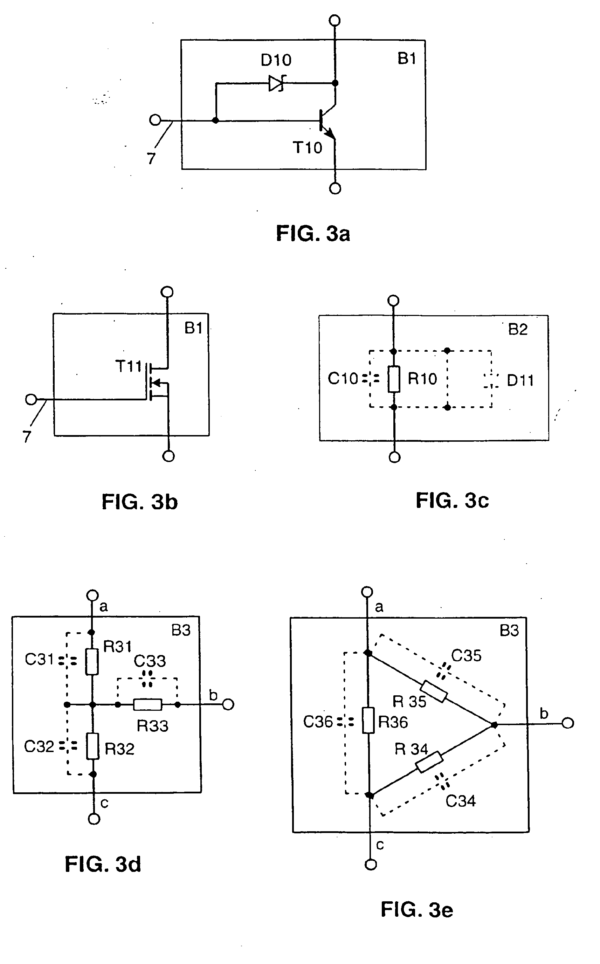

In Figur 3a ist ein Beispiel für die Ausführung des Blocks B1, den Verzögerungsschalter, aus Figur 2 gegeben. Im wesentlichen handelt es sich um einen NPN-Bipolartransistor T10. Dessen Steuerelektrode, die Basis, bildet den Steuereingang 7 des Blocks B1. Die Bezugselektrode, der Emitter, ist mit dem Block B2, einem Stromgegenkopplungsnetzwerk, zu verbinden. Die Arbeitselektrode, der Kollektor, ist mit der Steuerelektrode des Unterbrechungsschalters T4 zu verbinden. Als aus der Literatur bekannte Antisättigungsmaßnahme ist zwischen Basis und Kollektor eine Diode D10 geschaltet, die vorzugsweise als Schottky-Diode ausgeführt wird.

In Figur 3b ist ein weiteres Beispiel für die Ausführung des Blocks B1, den Verzögerungsschalter, aus Figur 2 gegeben. Im Vergleich zu Figur 3a ist der Bipolartransistor T10 durch den MOSFET T11 ersetzt. Aufgrund der Eigenschaften eines MOSFET sind keine Antisättigungsmaßnahmen vorgesehen.

In Figur 3c ist ein Beispiel für die Ausführung des Blocks B2, eines Stromgegenkopplungsnetzwerks, aus Figur 2 gegeben. Im einfachsten Fall besteht das Stromgegenkopplungsnetzwerk aus einem Widerstand R10, der auch den Wert Null annehmen kann, wie dies durch den gestrichelten Kurzschluss über R10 angedeutet ist. In diesem Fall ist die Einschaltschwelle des Verzögerungsschalters jedoch starken Exemplarstreuungen und einer starken Temperaturabhängigkeit unterworfen. Parallel zu R10 kann ein Kondensator C10 geschaltet werden, um die dynamischen Eigenschaften des Stromgegenkopplungsnetzwerks zu modellieren. Schnelle Änderungen am Steuereingang 7 des Blocks B1 wirken sich durch den Einsatz eines Kondensators C10 stärker aus als langsame. Dies kann wünschenswert sein, damit der Verzögerungsschalter im Block B1 beim Wechsel auf den High-Zustand einschaltet, bevor über R4 der Unterbrechungsschalter eingeschaltet wird.

Anstatt des Widerstands R10 kann auch, wie in Figur 3c gestrichelt angedeutet eine Diode D11 eingesetzt werden. Damit kann dem Verzögerungsschalter im Block B1 eine nichtlineare Einschaltcharakteristik verliehen werden. Eine Reaktion des Verzögerungsschalters auf Ströme im Level-Shift-Schalter unter einer gegebenen Schwelle kann damit vermieden werden.

In Figur 3d ist ein Ausführungsbeispiel für Block B3, der die Stromgegenkopplung des Level-Shift-Schalters und die Steuerung des Verzögerungsschalters bewerkstelligt, dargestellt. Zwischen die Anschlüsse a und c ist die Serienschaltung zweier Widerstände R31 und R32 geschaltet. Die Spannung an der Verbindungsstelle von R31 und R32 bezüglich Anschluss c, d. h. die Spannung am Widerstand R32, stellt ein Maß für den Strom durch den Level-Shift-Schalter T3 dar und wird über einen Widerstand R33 dem Messausgang b des Blocks B3 zugeführt.

Über das Verhältnis der Widerstandswerte von R31 und R32 kann eine Schwelle eingestellt werden, die festlegt, wie klein der Strom durch den Level-Shift-Schalter T3 werden muss, damit der Verzögerungsschalter im Block B1 abgeschaltet wird. Dieses Verhältnis ist so zu wählen, dass der Verzögerungsschalter im Block B 1 abgeschaltet wird, wenn die Ausgangsspannung der Halbbrücke UHB auf das Potenzial des Minuspols der Versorgungsspannung (J1) abgesunken ist. Der Widerstand R33 dient zur Entkopplung der Stromerfassung durch R31 und R32 von der Auswertung über Messausgang b und Steuereingang 7 in Block B1. Enthält der Block B1 einen MOSFET T11 entsprechend Figur 3b, so ist eine o. g. Entkopplung schon aufgrund der hohen Impedanz am Steuereingang 7 gegeben, und R33 kann den Wert Null annehmen. Enthält der Block B 1 einen Bipolartransistor T10 entsprechend Figur 3a, so ist der Wert von R33 so groß zu wählen, dass zum einen die Stromerfassung nicht wesentlich beeinflusst wird und zum andern das am Steuereingang 7 anliegende Signal den Bipolartransistor T10 nicht übersteuert, was zu einem verzögerten Ausschalten von T10 führen würde.

Gestrichelt sind in Figur 3d parallel zu R31, R32 und R33 die Kondensatoren C31, C32 und C33 eingezeichnet. Sie können optional eingesetzt werden, um die dynamischen Eigenschaften der beschriebenen Schwelle zu beeinflussen.

In Figur 3e ist ein weiteres Ausführungsbeispiel für Block B3, der die Stromgegenkopplung des Level-Shift-Schalters und die Steuerung des Verzögerungsschalters bewerkstelligt, dargestellt. Die Schaltung in Figur 3e kann mittels der bekannten Stern-Dreieck-Transformation für elektrische Netzwerke aus der Schaltung in Figur 3d abgeleitet werden. In sofern sind die beiden Ausführungsbeispiele aus Figur 3d und 3e äquivalent. Falls ein Kondensator C35 eingesetzt wird, kann sich für R35 ein so hoher Wert ergeben, dass er ganz entfallen kann.

In Figur 4 ist ein Ausführungsbeispiel für einen Halbbrücken-Wechselrichter dargestellt, der erfindungsgemäß das Minimum der Halbrückenausgangsspannung UHB detektiert. Im Vergleich zu Figur 2 ist parallel zum Block B2 die Serienschaltung zweier Dioden D4 und D5 geschaltet. Der Trapezkondensator C2 ist nicht direkt mit dem Bezugspotenzial (J1), sondern mit dem Verbindungspunkt von D4 und D5 verbunden. D4 und D5 stellen zusammen mit dem Block B2 eine Vorrichtung zur Erfassung des Stroms durch den Trapezkondensator dar. Im Augenblick des Ausschaltens des oberen Halbbrückenschalters T1 ist der Trapezkondensator geladen und beginnt sich durch den Laststrom IL über die Diode D5 zu entladen. Gelingt es dem Laststrom IL nicht, den Trapezkondensator vollständig zu entladen, wechselt der Laststrom IL bedingt durch im Lastkreis enthaltene Reaktanzen die Polarität. In diesem Augenblick beginnt ein Aufladevorgang des Trapezkondensators C2 über die Diode D4 und den Block B2. Der resultierende Spannungsabfall am Block B2 hebt das Potenzial der Bezugselektrode des Verzögerungsschalters im Block B1. Dies führt erfindungsgemäß zum Ausschalten des Verzögerungsschalters im Block B1. Damit ist die Blockierung des Steuereingangs des Unterbrechungsschalters T4 durch den Verzögerungsschalter im Block B1 aufgehoben, und der Unterbrechungsschalter T4 wird über den Widerstand R4 durch den Steuerbaustein 1 eingeschaltet. Durch den beschriebenen Vorgang gelingt es erfindungsgemäß, den unteren Halbbrückentransistor T2 im Minimum der Halbbrückenausgangsspannung UHB einzuschalten. Für die Dioden D4 und D5 werden bevorzugt Schottky-Dioden eingesetzt, um die Flussspannungen gering zu halten, wodurch eine frühzeitige Detektion des Minimums der Halbbrückenausgangsspannung UHB ermöglicht wird.

Obige Ausführungen beziehen sich durchwegs auf Halbbrücken-Wechselrichter. Die erfinderischen Gedanken lassen sich jedoch auch auf Vollbrücken-Wechselrichter übertragen.

## Patentansprüche

1. Halbbrücken-Wechselrichter, mit folgenden Merkmalen:
• der Halbbrücken-Wechselrichter ist mit einem Plus- (J3) und einem Minuspol (J1) einer Energieversorgung verbunden,
• ein oberer und ein unterer Halbbrückenschalter (T1, T2), die jeweils einen Steuereingang besitzen, wobei der obere Halbbrückenschalter (T1) mit dem Plus (J3)- und der untere Halbbrückenschalter (T2) mit dem Minuspol (J1) gekoppelt ist,
• ein Steuerbaustein (1), der an einem Steuerausgang (2) ein rechteckförmiges Steuersignal abgibt, das einen Low- und einen High-Zustand aufweisen kann,
• ein Level-Shift-Schalter (T3) zum Abschalten des oberen Halbbrückenschalters (T1), der mit dem Eingang einer oberen Ansteuerschaltung (6) gekoppelt ist, der mit dem Minuspol (J1) gekoppelt ist und vom Steuerbaustein (1) gesteuert wird,
**dadurch gekennzeichnet, dass**
• der Steuerausgang (2) des Steuerbausteins (1) über einen Unterbrechungsschalter (T4) mit dem Steuereingang des unteren Halbbrückenschalters (T2) gekoppelt ist,
• der Unterbrechungsschalter (T4) so verschaltet ist, dass er nur dann schließbar ist, wenn der Strom durch den Level-Shift-Schalter (T3) unter einer gegebenen Schwelle liegt.

2. Halbbrücken-Wechselrichter gemäß Anspruch 1, **dadurch gekennzeichnet, dass** der Unterbrechungsschalter (T4) einen Steuereingang besitzt, der mit dem Steuerausgang (2) des Steuerbausteins (1) gekoppelt ist und gekoppelt ist mit einem Verzögerungsschalter (B1), der gesteuert wird vom Strom durch den Level-Shift-Schalter (T3) und den Steuereingang des Unterbrechungsschalters (T4) blockiert, so lange der Strom durch den Level-Shift-Schalter (T3) über einer gegebenen Schwelle liegt.

3. Halbbrücken-Wechselrichter gemäß Anspruch 2, **dadurch gekennzeichnet, dass** der Unterbrechungsschalter (T4) ein Halbleiterschalter mit einer Arbeits-, einer Bezugs- und einer Steuerelektrode ist, wobei die Arbeitselektrode mit dem Steuerausgang (2) des Steuerbausteins (1) gekoppelt ist, die Bezugselektrode mit dem Steuereingang des unteren Halbbrückenschalters (T2) gekoppelt ist und die Steuerelektrode zum einen über einen Ansteuerwiderstand (R4) mit dem Steuerausgang (2) des Steuerbausteins (1) gekoppelt ist und zum anderen mit dem Verzögerungsschalter (B1) gekoppelt ist.

4. Halbbrücken-Wechselrichter gemäß Anspruch 3, **dadurch gekennzeichnet, dass** der Verzögerungsschalter (B1) ein Halbleiterschalter mit einer Arbeits-, einer Bezugs- und einer Steuerelektrode ist, wobei die Arbeitselektrode mit dem Steuereingang des Unterbrechungsschalters (T4) gekoppelt ist, die Bezugselektrode über ein Stromgegenkopplungsnetzwerk (B2) mit dem Minuspol der Energieversorgung (J1) gekoppelt ist und die Steuerelektrode (7) mit einer Strommessvorrichtung (B3) gekoppelt ist, die an einem Messausgang (b) ein Messsignal liefert, das proportional zum Strom durch den Level-Shift-Schalter ist.

5. Halbbrücken-Wechselrichter gemäß Anspruch 4, **dadurch gekennzeichnet, dass** die Strommessvorrichtung (B3) mindestens einen Stromgegenkopplungswiderstand (R31, R32, R34, R35, R36) enthält, der den Level-Shift-Schalter (T3) mit dem Minuspol der Energieversorgung (J1) verbindet und die Strommessvorrichtung (B3) am Messausgang (b) eine Spannung liefert, deren Effektivwert proportional zur Spannung am mindestens einen Stromgegenkopplungswiderstand (R31, R32, R34, R35, R36) ist.

6. Halbbrücken-Wechselrichter gemäß einem der Ansprüche 2-5, **dadurch gekennzeichnet, dass** ein Trapezkondensator (C2) mit der Arbeitselektrode des unteren Halbbrückenschalters (T2) gekoppelt ist und die Blockierung des Steuereingangs des Unterbrechungsschalters (T4) durch eine Vorrichtung (D4, D5, B2), die den Strom durch den Trapezkondensator (C2) erfasst, aufgehoben wird, wenn der Strom von der Arbeitselektrode des unteren Halbbrückenschalters (T2) zum Trapezkondensator (C2) fließt.

7. Halbbrücken-Wechselrichter gemäß Anspruch 4 oder 5 , **dadurch gekennzeichnet, dass** parallel zum Stromgegenkopplungsnetzwerk (B2) die Serienschaltung von zwei Dioden (D4, D5) geschaltet ist und zwischen die Verbindungsstelle der Dioden und die Arbeitselektrode des unteren Halbbrückenschalters (T2) ein Trapezkondensator (C2) geschaltet ist, wobei die Dioden (D4, D5) so gepolt sind, dass ein Strom, der von der Arbeitselektrode des unteren Halbbrückenschalters (T2) in den Trapezkondensator (C2) fließt, durch das Stromgegenkopplungsnetzwerk (B2) fließt.

8. Halbbrücken-Wechselrichter gemäß einem der vorigen Ansprüche, **dadurch gekennzeichnet, dass** durch den Halbbrücken-Wechselrichter eine Lampe mit Energie versorgt wird.

## Claims

1. A half-bridge inverter, having the following features:
• the half-bridge inverter is connected to a positive pole (J3) and a negative pole (J1) of a power supply.
• an upper and a lower half-bridge switch (T1, T2) that respectively have a control input, the upper half-bridge switch (T1) being coupled to the positive pole (J3), and the lower half-bridge switch (T2) being coupled to the negative pole (J1),
• a control module (1) that outputs at a control output (2) a rectangular control signal that can have a low state and a high state, and
• a level shift switch (T3) for disconnecting the upper half-bridge switch (T1), which is coupled to the input of an upper driver circuit (6), that is coupled to the negative pole (J1) and is controlled by the control module (1)
**characterized in that**
• the control output (2) of the control module (1) is coupled via an interrupt initiation switch (T4) to the control input of the lower half-bridge switch (T2), and
• the interrupt initiation switch (T4) is connected up in such a way that it can be closed only whenever the current through the level shift switch (T3) is below a given threshold.

2. Half-bridge inverter according to claim 1, **characterized in that** the interrupt initiation switch (T4) has a control input that is coupled to the control output (2) of the control module (1), and is coupled to a time-delay switch (B1) that is controlled by the current through the level shift switch (T3) and blocks the control input of the interrupt initiation switch (T4) as long as the current through the level shift switch (T3) is above a given threshold.

3. Half-bridge inverter according to claim 2, **characterized in that** the interrupt initiation switch (T4) is a semiconductor switch with a working electrode, a reference electrode and a control electrode, the working electrode being coupled to the control output (2) of the control module (1), the reference electrode being coupled to the control input of the lower half-bridge switch (T2), and the control electrode being coupled, firstly, to the control output (2) of the control module (1) via a drive resistor (R4) and being coupled, secondly, to the time-delay switch (B1).

4. Half-bridge inverter according to claim 3, **characterized in that** the time-delay switch (B1) is a semiconductor switch with a working electrode, a reference electrode and a control electrode, the working electrode being coupled to the control input of the interrupt initiation switch (T4), the reference electrode being coupled to the negative pole of the power supply (J1) via a current negative feedback network (B2), and the control electrode (7) being coupled to a current measuring apparatus (B3) that supplies at a measurement output (b) a measuring signal that is proportional to the current through the level shift switch.

5. Half-bridge inverter according to claim 4, **characterized in that** the current measuring apparatus (B3) includes at least one current negative feedback resistor (R31, R32, R34, R35, R36) that connects the level shift switch (T3) to the negative pole of the power supply (J1), and the current measuring apparatus (B3) supplies at the measurement output (b) a voltage whose root-mean-square value is proportional to the voltage across at least one current negative feedback resistor (R31, R32, R34, R35, R36).

6. Half-bridge inverter according to one of claims 2-5, **characterized in that** a trapezoidal capacitor (C2) is coupled to the working electrode of the lower half-bridge switch (T2), and the blocking of the control input of the interruption initiation switch (T4) is cancelled by an apparatus (D4, D5, B2), which acquires the current through the trapezoidal capacitor (C2), when the current flows from the working electrode of the lower half-bridge switch (T2) to the trapezoidal capacitor (C2).

7. Half-bridge inverter according to claim 4 or 5, **characterized in that** the series circuit of two diodes (D4, D5) is connected in parallel with the current negative feedback network (B2), and a trapezoidal capacitor (C2) is connected between the connecting point of the diodes and the working electrode of the lower half-bridge switch (T2), the diodes (D4, D5) being polarized such that a current that flows from the working electrode of the lower half-bridge switch (T2) into the trapezoidal capacitor (C2) flows through the current negative feedback network (B2).

8. Half-bridge inverter according to one of the preceding claims, **characterized in that** a lamp is supplied with power via the half-bridge inverter.

## Revendications

1. Onduleur à demi-pont ayant des caractéristiques suivantes :
• l'onduleur à demi-pont est relié à un pôle (J3) plus et à un pôle (J1) moins d'une alimentation en énergie ;
• un commutateur (T1) supérieur de demi-pont et un commutateur (T2) inférieur de demi-pont qui ont, respectivement, une entrée de commande, le commutateur (T1) supérieur de demi-pont étant couplé au pôle (J3) plus et le commutateur (T2) inférieur de demi-pont au pôle (J1) moins ;
• un module (1) de commande, qui émet sur une sortie (2) de commande un signal de commande rectangulaire, qui peut présenter un état bas et un état haut ;
• un commutateur (T3) level-shift qui est destiné à mettre le commutateur (T1) supérieur de demi-pont hors circuit, qui est couplé à l'entrée d'un circuit (6) supérieur de commande, qui est couplé au pôle (J1) moins et qui est commandé par le module (1) de commande
**caractérisé en ce que**
• la sortie (2) de commande du module (1) de commande est couplée par un commutateur (T4) d'interruption à l'entrée de commande du commutateur (T2) inférieur de demi-pont ;
• le commutateur (T4) d'interruption est monté de manière à ne pouvoir être fermé que si le courant passant par le commutateur (T3) level-shift est inférieur à un seuil donné.

2. Onduleur à demi-pont suivant la revendication 1, **caractérisé en ce que** le commutateur (T4) d'interruption a une entrée de commande, qui est couplée à la sortie (2) de commande du module (1) de commande, et est couplé à un interrupteur (B1) de temporisation, qui est commandé par le courant passant dans le commutateur (T3) level-shift et qui bloque l'entrée de commande du commutateur (T4) d'interruption tant que le courant passant dans le commutateur (T3) level-shift est supérieur à un seuil donné.

3. Onduleur à demi-pont suivant la revendication 2, **caractérisé en ce que** le commutateur (T4) d'interruption est un commutateur à semi-conducteurs ayant une électrode de travail, une électrode de référence et une électrode de commande, l'électrode de travail étant couplée à la sortie (2) de commande du module (1) de commande, l'électrode de référence étant couplée à l'entrée de commande du commutateur (T2) inférieur de demi-pont et l'électrode de commande étant couplée d'une part par une résistance (R4) de commande à la sortie (2) de commande du module (1) de commande et d'autre part à l'interrupteur (B1) de temporisation.

4. Onduleur à demi-pont suivant la revendication 3, **caractérisé en ce que** l'interrupteur (B1) de temporisation est un interrupteur à semi-conducteurs ayant une électrode de travail, une électrode de référence et une électrode de commande, l'électrode de travail étant couplée à l'entrée de commande de l'interrupteur (T4) d'interruption, l'électrode de référence étant couplée par un réseau (B2) de contre-réaction de courant au pôle moins de l'alimentation (J1) en énergie et l'électrode (7) de commande étant couplée à un dispositif (B3) de mesure du courant qui fournit à une sortie (b) de mesure un signal de mesure proportionnel au courant passant dans le commutateur level-shift.

5. Onduleur à demi-pont suivant la revendication 4, **caractérisé en ce que** le dispositif (B3) de mesure du courant comporte au moins une résistance (R31, R32, R34, R35, R36) de contre-réaction du courant, qui relie le commutateur (T3) level-shift au pôle moins de l'alimentation (J1) en énergie et le dispositif (B3) de mesure du courant fournit à la sortie (b) de mesure une tension dont la valeur efficace est proportionnelle à la tension aux bornes d'au moins une résistance (R31, R32, R34, R35, R36) de contre-réaction du courant.

6. Onduleur à demi-pont suivant l'une des revendications 2 à 5, **caractérisé en ce qu'**un condensateur (C2) trapèze est couplé à l'électrode de travail du commutateur (T2) inférieur de demi-pont et le blocage de l'entrée de commande de l'interrupteur (T4) d'interruption est levé par un dispositif (D4, D5, B2) qui détecte le courant passant dans le condensateur (C2) trapèze lorsque le courant passe de l'électrode de travail du commutateur (T2) inférieur de demi-pont au condensateur (C2) trapèze.

7. Onduleur à demi-pont suivant la revendication 4 ou 5, **caractérisé en ce que** le circuit série de deux diodes (D4, D5) est monté en parallèle au réseau (B2) de contre-réaction du courant et un condensateur (C2) trapèze est monté entre le point de liaison des diodes et l'électrode de travail du commutateur (T2) inférieur de demi-pont, les diodes (D4, D5) étant polarisées de sorte qu'un courant qui passe de l'électrode de travail du commutateur (T2) inférieur de demi-pont au condensateur (C2) trapèze passe dans le réseau (B2) de contre-réaction du courant.

8. Onduleur à demi-pont suivant l'une des revendications précédentes, **caractérisé en ce que** l'onduleur à demi-pont alimente une lampe en énergie.
